Europäisches Patentamt

European Patent Office

Office européen des brevets

(19)

(11) Veröffentlichungsnummer : **0 147 621**
**B1**

(12) **EUROPÄISCHE PATENTSCHRIFT**

(45) Veröffentlichungstag der Patentschrift :
17.08.88

(51) Int. Cl.⁴ : **D 03 D   1/00, B 60 R  22/00**

(21) Anmeldenummer : **84114055.1**

(22) Anmeldetag : **21.11.84**

(54) **Gurtband mit flexiblem Schussmaterial.**

(30) Priorität : **16.12.83 DE 3345508**

(43) Veröffentlichungstag der Anmeldung :
**10.07.85 Patentblatt 85/28**

(45) Bekanntmachung des Hinweises auf die Patenterteilung : **17.08.88 Patentblatt 88/33**

(84) Benannte Vertragsstaaten :
**BE DE FR GB IT NL SE**

(56) Entgegenhaltungen :
**EP-A- 0 021 104**
**DE-U- 8 304 806**
**FR-A- 2 286 664**

(73) Patentinhaber : **leperband N.V.**
**Oostkade 22B**
**B-8900 leper (BE)**

(72) Erfinder : **Koch, Gerhard**
**Rue des Frénes 8**
**B-Ophain (BE)**

(74) Vertreter : **Weber, Dieter, Dr. et al**
**Dr. Dieter Weber und Dipl.-Phys. Klaus Seiffert Patentanwälte Gustav-Freytag-Strasse 25 Postfach 6145 D-6200 Wiesbaden 1 (DE)**

EP 0 147 621 B1

Jouve, 18, rue St-Denis, 75001 Paris, France

## Beschreibung

Die Erfindung betrifft ein Gurtband, insbesondere für Kraftfahrzeugsicherheitssysteme, welches mit zwei gleichzeitig in das Gewebe eingetragenen Schußfäden gewebt ist, mit einem einschichtig gewebten Mittelteil und einem Randteil.

Die verschiedensten Arten von gewebten Gurtbändern sind bekannt. Sicherheitsgurtbänder werden in Flugzeugen und besonders weit verbreitet in Kraftfahrzeugen verwendet. Bei den Kraftfahrzeugen befindet sich häufig ein Gurtaufwickelautomat im unteren Bereich am Türholm und wird über einen Umlenkbeschlag, der in Schulter- oder Kopfhöhe des Insassen am Türholm oben befestigt ist, über die Schulter des Insassen geführt. Das Gurtband muß durch diesen Umlenkbeschlag gezogen und umgelenkt werden, wobei im Normalbetrieb im Laufe der Zeit eine große Länge Gurtband mehr oder weniger schnell durch den Umlenkbeschlag in die eine und andere Richtung hindurchgezogen wird. Hierbei ist das Problem des Verdrehens des Gurtbandes bekannt, welches sich insbesondere dann ergibt, wenn das Gurtband in Querrichtung eine ungleichmäßige und zu geringe Steife besitzt.

Bekannt ist auch ein weiteres Problem, bei welchem sich ein Filmspuleffekt, d. h. ein zu lockeres Aufwickeln im Gurtaufroller ergibt, so daß im Unfallmoment selbst bei sperrendem Gurtaufroller ein gewisses Stück Gurtband doch herausgezogen werden kann. Hierdurch wird eine unkontrollierte Vorverlagerung des Insassen eines Kraftfahrzeuges bei einem Unfall bewirkt.

Man hat zur Behebung dieser Nachteile bereits versucht, monofile Schußgarne zur Erhöhung der Gurtbandsteife in Querrichtung zu verweben. Diese Schußgarne sind aber steif und rufen mit Nachteil, wenn sie am Rand nicht abgedeckt sind, eine sägezahnartige, scharfe Kante hervor, die vom Benutzer des Gurtbandes als unangenehm empfunden wird und bei Unfällen sogar gefährlich ist.

Aus diesem Grund hat man zwar monofile Schußgarne zur Erhöhung der Steife des Gurtbandes in Querrichtung verwebt, den Sägeeffekt des Randes hat man aber durch Anweben von Hohlkanten ausgeschaltet. Dieses System hat aber verschiedene Nachteile. Durch die Verwendung von besonderen Materialien, insbesondere durch die Notwendigkeit des Anwebens von Hohlkanten ohne Festigkeitsfunktionen ergibt sich ein nicht unerheblicher Kostenaufwand. Wenn man bei der Verarbeitung eines Randes mit Hohlkante die Maschine nicht exakt einstellt, ergeben sich Bruchfestigkeits- und Abriebprobleme. Selbst bei ordentlich angesetzter Hohlkante hat man stets ungleiche Dicken zwischen Mittelteil und Kantteil des Gurtbandes. Überdies ist bei der Herstellung am Webstuhl der Anbau eines Spezialteiles erforderlich.

Ein Gurtband der eingangs bezeichneten Art ist aus der EP-A-0021104 bekannt. Dieses zeigt aber ein mehrschichtiges Gewebe, nämlich mit zwei Kantketten und einer Mittelkette. Durch diesen Aufbau ergibt sich während der Produktion eine kompliziertere Handhabung, woraus sich ein Fehlerrisiko ergibt. Das bekannte Gewebe ist auch aufwendiger, denn um im Randbereich etwa eine gleiche Dicke zu erreichen, muß ein feineres Kettmaterial verarbeitet werden.

Das bekannte Gurtband ist mit Nachteil außerdem abriebempfindlicher, insbesondere an der Verbindungsstelle zwischen Randteil und Mittelteil. Außerdem haben die Kantketten keine tragende Funktion. Das bekannte Webverfahren führt also zu einem mehrschichtigen, im Randbereich dicken Gewebe.

Der Erfindung liegt daher die Aufgabe zugrunde, ein Gurtband der eingangs beschriebenen Art so zu verbessern, daß ohne Anweben einer Hohlkante am Rand dennoch in Querrichtung eines dünneren Gurtbandes eine ausreichende Steifigkeit vorliegt, die Produktion vereinfacht wird und ein geringerer Abrieb gegeben ist.

Diese Aufgabe wird erfindungsgemäß dadurch gelöst, daß das Gurtband auch im Randteil einschichtig gewebt ist, daß es zwei verschiedene Schußfäden aufweist, von denen der eine ein monofiler und der andere ein multifiler Schußfaden ist, daß mindestens auf einer Seite des Gurtbandes nur der multifile Schußfaden sich in den Randteil erstreckt und daß alle Kettfäden tragende Funktionen in dem Gewebe haben. Neben dem normalen multifilen Schußfaden, einem im allgemeinen Polyesterfaden, dient als zweiter Schußfaden ein monofiler Polyesterfaden oder dergleichen, der gute Federeigenschaften besitzt und somit dem Gurtband eine bleibende Flexibilität und Steife in Querrichtung gibt, ohne die Längensteifigkeit zu erhöhen. Dies ist besonders wichtig, um ein gutes Auf- und Ausrollen auf den Gurtaufrollautomaten bzw. aus diesem heraus zu gewährleisten. Auch der eingangs erläuterte Filmspuleffekt kann auf diese Weise so gering wie möglich gehalten werden.

Die Hauptvorteile des neuen Randteiles sind die Vermeidung einer Spezialkante, wie z. B. der vorstehend erwähnten Hohlkante, mit den damit verbundenen Nachteilen und Vereinfachung der Handhabung des Gurtbandes während der Produktion.

Vorteilhaft ist es erfindungsgemäß, wenn der monofile und der multifile Schußfaden im Mittelteil in einem gemeinsamen Fach verlaufen. Hierzu führt man die Schußfäden in zweckmäßiger Weise mit separaten Nadeln oder Schützen ein. Im Randteil befindet sich nur der multifile Schußfaden, so daß das befürchtete Herausragen des monofilen Fadens an der äußeren Kante eliminiert ist.

Die Erfindung ist vorteilhaft weiter dadurch ausgestaltet, daß nur eine der beiden Längskanten des Gurtbandes den Ranteil aufweist, in welche nur der multifile Schußfaden mit dem Kettfaden verwoben ist. Die andere Kante kann wie eine standard gewebte Kante ausgebildet sein. Hierdurch ergeben sich herstellungstechnische Vorteile. Ferner sind die monofilen Schußfäden abgedeckt.

Mit dem neuen System ist jede Grundbindungsart herstellbar. Durch die Erfindung ist es auch möglich, optische Kanteneffekte zu erzielen. Durch die Verwendung einer Kombination zwischen multifilen und monofilen Schußgarnen wird außerdem die schlechte Nahtfestigkeit des monofilen Fadens beim Vernähen des Gurtbandes, insbesondere des Sicherheitsgurtbandes, kompensiert. Das Gurtband gemäß der Erfindung kann auf alle Websysteme angewendet werden. Es kann auf Standardmaschinen hergestellt werden, und speziale zusätze brauchen nicht angebaut zu werden.

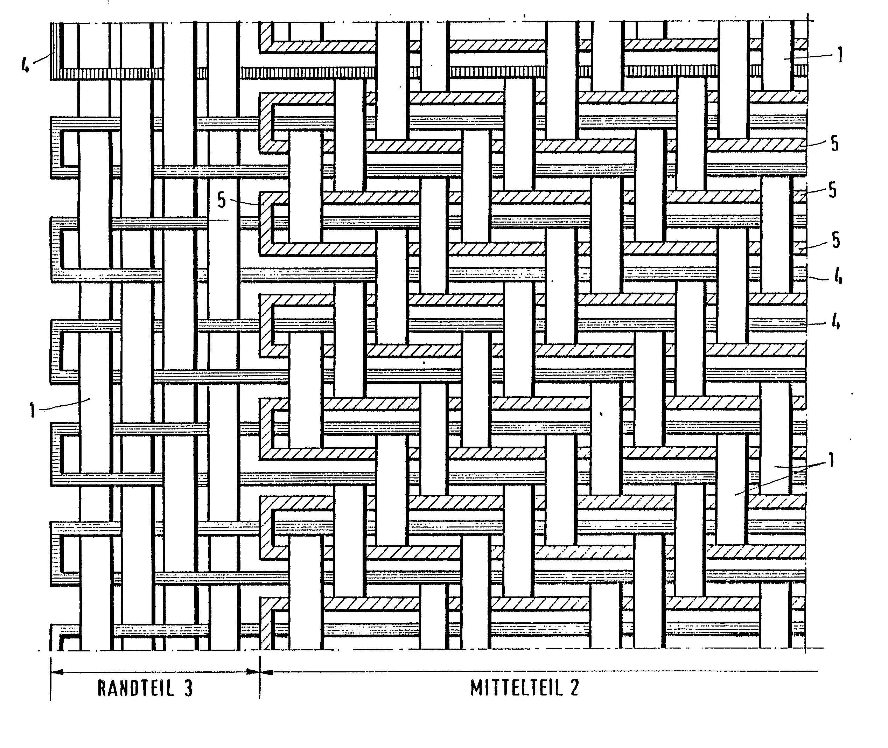

Weitere Vorteile, Merkmale und Anwendungsmöglichkeiten der vorliegenden Erfindung ergeben sich aus der folgenden Beschreibung eines bevorzugten Ausführungsbeispieles in Verbindung mit der einzigen Zeichnung.

Diese zeigt von unten nach oben die weißen Kettfäden 1, die sich sowohl über den Mittelteil 2 als auch den in der Zeichnung links dargestellten Randteil 3 erstrecken. Oben, unten und rechts ist das stückweise dargestellte Gurtband in der Zeichnung abgebrochen. Als Schußfaden dient zum einen der mit 4 bezeichnete multifile Schußfaden, der schwarz dargestellt ist, und zum anderen der allgemein mit 5 bezeichnete monofile Schußfaden, der mit einer Schrägschraffur in der Zeichnung gekennzeichnet ist.

Man erkennt, daß sich beide Arten von Schußfäden 4 und 5 im Mittelteil 2 befinden, im Randteil 3 jedoch nur der multifile Schußfaden 4 angeordnet ist. Man erkennt die einschichtige Webart des Gurtbandes, wobei im Randteil 3 der monofile Schußfaden 5 durch die außenliegenden Kettfäden 1 abgedeckt ist. Die Kettfäden 1 haben im Gewebe alle tragende Funktion.

Der multifile Schußfaden 4 und der monofile Schußfaden 5 werden mit nicht gezeigten separaten Nadeln oder Schützen in das Gewebe eingetragen. Dabei dringen, wie im Ergebnis in der Zeichnung dargestellt ist, im Mittelteil 2 beide Schußnadeln in ein gemeinsames Fach ein. Im Randteil 3 wird nur der multifile Schußfaden 4 eingebracht.

Dadurch wird verhindert, daß der monofile Faden 5 an den äußeren Kanten (an der linken Kante des Randteiles 3 in der Figur) herausragt. Im Falle des dargestellten Gurtbandgewebes ist der monofile Faden 5 im Randteil 3 nicht zu finden, denn er ist durch die außenliegenden Kettfäden 1 abgedeckt.

Ein solches Gurtbandgewebe wird vorzugsweise auf einem Standard-Doppelnadelwebstuhl mit Doppelfach hergestellt.

Bei auf Nadelwebstühlen gewebten Gurtbändern wird vorzugsweise nur eine Kante auf die vorstehend beschriebene Art gewebt. Die gegenüberliegende Seite wird mittels einer Wirknadel durch den Fangfaden erzeugt, der so weit ins Gewebe hineingezogen wird, daß der gleiche Effekt erzielt wird, wie bei einer normal oder standardgewebten Kante.

Hierfür sind systeme, die eine Verhäkelung mit einem oder zwei Fangfäden versehen, am besten geeignet.

**Patentansprüche**

1. Gurtband, insbesondere für Kraftfahrzeugsicherheitssysteme, welches mit zwei gleichzeitig in das Gewebe eingetragenen Schußfäden (4, 5) gewebt ist, mit einem einschichtig gewebten Mittelteil (2) und einem Randteil (3), dadurch gekennzeichnet, daß das Gurtband auch im Randteil (3) einschichtig gewebt ist, daß es zwei verschiedene Schußfäden (4, 5) aufweist, von denen der eine ein monofiler (5) und der andere ein multifiler Schußfaden (4) ist, daß mindestens auf einer Seite des Gurtbandes nur der multifile Schußfaden (4) sich in den Randteil (3) erstreckt und daß alle Kettfäden (1) tragende Funktion in dem Gewebe haben.

2. Gurtband nach Anspruch 1, dadurch gekennzeichnet, daß der monofile (5) und der multifile Schußfaden (4) im Mittelteil (2) in einem gemeinsamen Fach verlaufen.

3. Gurtband nach Anspruch 1 oder 2, dadurch gekennzeichnet, daß nur eine der beiden Längskanten den Randteil (3) aufweist, in welchem nur der multifile Schußfaden (4) mit den Kettfäden (1) verwoben ist.

**Claims**

1. Belt web, especially for motor vehicle safety systems, which is woven by simultaneously shooting into the web two weft threads (4, 5), with a single-layer woven centre portion (2) and an edge portion (3), characterized in that the belt web is woven in single layer also in the edge portion (3), that it has two different weft threads (4, 5) of which one is a monofilament (5) and the other is a multifilament weft thread (4), that at least on one side of the belt web only the multifilament weft thread (4) extends into the edge portion (3), and that all the warp threads (1) have supporting functions in the web.

2. Belt web according to claim 1, characterized in that in the centre portion (2) the monofilament (5) and the multifilament thread (4) run in a common field.

3. Belt web according to claim 1 or 2, characterized in that only one of the two longitudinal edges has the edge portion (3) in which only the multifilament weft thread (4) is interwoven with the warp threads (1).

**Revendications**

1. Sangle, notamment pour des systèmes de sécurité dans des véhicules automobiles, qui est formée par tissage de deux fils de trame (4, 5) insérés simultanément dans le tissu et comporte une partie centrale (2) tissée sous la forme d'une nappe unique, et une partie latérale (3), caractérisée en ce que la sangle est tissée sous la forme d'une nappe unique également dans la partie latérale (3), en ce qu'elle comporte deux fils de trame (4, 5) différents, dont l'un est un fil de trame monofilament (5) et dont l'autre est un fil de trame multifilament (4), en ce qu'au moins d'un côté de la sangle, seul le fil de trame multifilament (4) s'étend dans la partie latérale (3) et en ce que tous les fils de chaîne (1) assurent la fonction du support dans le tissu.

2. Sangle selon la revendication 1, caractérisée en ce que le fil de trame monofilament (5) et le fil de trame multifilament (4) s'étendent sous la forme d'une foule commune dans la partie centrale (2).

3. Sangle selon la revendication 1 ou 2, caractérisée en ce que seul l'un des deux bords longitudinaux possède la partie latérale (3), dans laquelle seul le fil de trame multifilament (4) est tissé avec les fils de chaîne (1).

RANDTEIL 3          MITTELTEIL 2

0 147 621